Europäisches Patentamt

European Patent Office

Office européen des brevets

(11) Publication number : **0 443 739 A1**

# EUROPEAN PATENT APPLICATION

(21) Application number : 91300847.0

(22) Date of filing : 01.02.91

(51) Int. Cl.$^5$ : **A62D 3/00, C01B 25/06, C01G 28/00, C07F 9/00**

(30) Priority : 14.02.90 GB 9003332

(43) Date of publication of application :
28.08.91 Bulletin 91/35

(84) Designated Contracting States :
DE FR IT

(71) Applicant : AIR PRODUCTS AND CHEMICALS, INC.
7201 Hamilton Boulevard
Allentown, PA 18195-1501 (US)

(72) Inventor : Bradley, Donald Charlton
171 Shakespeare Tower
Barbican, London EC2Y 8DR (GB)
Inventor : Zheng, Dao-Hong, Queen Mary
College
University of London, Department of
Chemistry
Mile End Road, London E1 4NS (GB)

(74) Representative : Lucas, Brian Ronald
Lucas, George & Co. 135 Westhall Road
Warlingham Surrey CR6 9HJ (GB)

(54) Method for safe handling of arsenic and phosphorous compounds.

(57)    Arsine and phosphine are reversibly reacted with a boron compound to form a complex which is relatively stable under ambient conditions and which can be relatively safely transported. The arsine and phosphine can be recovered by changing the conditions so that the complex dissociates. Suitable boron compounds include tris(pentafluorophenyl)boron.

EP 0 443 739 A1

Jouve, 18, rue Saint-Denis, 75001 PARIS

## A METHOD FOR HANDLING ARSINE AND PHOSPHINE

This invention relates to a method for handling arsine and phosphine.

BACKGROUND OF THE PRIOR ART

The reaction of phosphorus compounds with organo boranes is known in the prior art such as the article "Tris(pentafluorophenyl)boron" by A.G. Massey, A.J. Park and F.G.A. Stone appearing in Proceedings, page 212, July 1963 wherein tris(pentafluorophenyl)borane is shown to react with triphenyl phospine to form a complex.

The nature of fluorination on metal bonded to phenyl radicals was discussed in an article "Preparation and Characterization of Some Tin Compounds" by J.L.W. Pohlmann, F.E. Brinckmann, G. Tesi and R.E. Donadio appearing in Zeitschrift Fur Naturforschung, 20b, pp 1 through 4, 1965. In an article entitled "Preparation and Characterization of Group IIIA Derivatives" by J.L.W. Pohlmann and F.E. Brinckmann in the same publication at pp 5 through 11 the preparation of tris(pentafluorophenyl)boron is described as well as its reaction with triethyl aluminum.

An article "Perfluorophenyl Derivatives of the Elements, I. Tris(pentafluorophenyl)boron" by A.G. Massey and A.J. Park appearing in Journal of Organometallic Chemistry, Vol 2 (1964), pp 245 through 250, describes the preparation of tris(pentafluorophenyl)boron and identifies that compound as a Lewis acid and further describes adducts made from such Lewis acid. Specifically, the article mentions the reaction of tris(pentafluorophenyl)boron with triphenylphosphine. Characteristics of the complexes are not set forth.

In an article "Fluorocarbon Derivatives of Metals" by P.M. Treichel and F.G.A. Stone, pp 143 through 216, various boron derivatives of fluorocarbons are described as well as various pentafluororophenyl compounds.

An article "Perfluorophenyl Derivatives of the Elements, VII. Further Studies on Tris(pentafluorophenyl)boron" by A.B. Massey and A.J. Park appearing in Journal of Organometallic Chemistry, pp 218 through 225, describes various reactions of tris(pentafluorophenyl)boron including its reaction with water.

In addition, it is known in the prior art that arsine and phosphine are valuable commodities as reactants in processes leading to sophisticated and important electronic materials. A major drawback to the systematic and full utilisation of arsine and phosphine is their high toxicity, volatility and in some instances pyrophoric nature which aggravate their safe containment for commercial processing. This long-term problem with the nature of important electronic materials reactants such as arsine and phosphine has not been resolved by the art up until the present time.

Although the prior art has specifically disclosed the preparation of tris(pentafluorophenyl)boron which is a halogenated aryl compound of boron and has noted that compounds reaction with triphenylphosphine or water, the prior art has not characterised the reaction products or implemented them in any significant end-use application. The present invention sets forth a valuable methodology utilising compounds such as tris(pentafluorophenyl)boron to overcome the handling problem of arsine and phosphine and provide a solution to a long felt need as set forth below.

BRIEF SUMMARY OF THE INVENTION

The present invention provides a method for handling arsine and phosphine comprising reacting said arsine and phosphine in a chemically reversible reaction with a boron compound containing ligands comprising aryl ring systems which are at least partially halogenated, to form a stable less-reactive complex at ambient conditions, implementing the necessary handling of the complex and then altering conditions in which the complex is present to be sufficiently non-ambient to reverse said reaction and dissociate the chemically bound complex to result in the free arsine or phospine.

Preferably, the boron compound additionally reacts with an impurity in the arsine or phosphine irreversibly at the conditions of reversibility of said arsine or phospine complexes. Optimally, water would be an impurity that would be irreversibly bound in the method of the present invention.

Preferably, the halogen is fluorine.

Preferably, the aryl ring system is fully halogenated.

Preferably, the boron compound is tris(pentafluorophenyl)boron.

Preferably, the non-ambient condition is elevated temperature sufficient to dissociate the complex without decomposing the arsine or phosphine boron compound.

Preferably, the handling identified in the method of the present invention includes packaging, transportation and storage of the complex.

DETAILED DESCRIPTION OF THE INVENTION

The present invention utilises non-volative Group III Lewis acids to reversibly bind to arsine and phosphine. Binding these pressurised toxic gases in a complex with these Lewis acids produces a low hazard adduct complex which can be stored safely in a gas containment apparatus at low pressure. A catastrophic failure of valves and/or regulators at normal temperatures would result in very little arsine or phosphine being released and then only slowly at kinetic diffusion limited release of the arsine or phosphine in the event of an extreme spill of bulk material. Additionally, the parent Lewis acid reacts with water present as an impurity, imparting in situ purification capabilities to the arsine or phosphine. Any water, which is a ubiquitous contaminant in arsine and phosphine, would be gettered by the parent Lewis acid.

The advantage of the present invention principally lies in the fact that it reduces the hazard level of working with arsine and phospine significantly. The present invention reversibly binds an otherwise high-pressure toxic gas, forming a low hazard, low volatility solid adduct complex allowing for environmentally acceptable methods of packaging, transporting and/or storage of the compounds as such complex. Additionally, preferred embodiments will intrinsically purify the arsine or phospine by removing water present in situ in the materials.

The previously suggested solutions to the problem of handling arsine and phosphine in electronic fabrication environments include the use of molecular sieves to trap the arsine and/or phosphine in a pore structure of, for instance, a 4A molecular molecular sieve. It is difficult to remove all the Group V hydride from the sieve even under relatively rigorous conditions due to the heat of adsorption being extremely high. Additionally, molecular sieves generally contain significant levels of potential dopant elements such as sodium, calcium and silicon, among other. These compounds or elements once introduced into the reactants would be detrimental for subsequent semiconductor or electronic material fabrication. The other potential solution to the toxicity and hazard levels associated with Group V hydride use has been to develop Group V organometallic compounds which potentially could be used to substitute for the hydrides in a given process. This approach has led to mixed success. The present invention works simply by forming the Lewis acid/base pair between an appropriate Lewis acid boron compound containing ligands comprising aryl ring systems which are at least partially halogenated, such as tris(pentafluorophenyl)boron, and arsine or phosphine. The reaction is specified by, but not limited to, the following reactions and reagents :

$$B(C_6F_5)_3 + PH_3 \rightarrow B(C_6F_5)_3.PH_3$$

This reaction is conducted wherein the tris(pentafluorophenyl)boron is a solid, the phosphine is in the gaseous state, and the resulting product is a solid. Impurities, such as water which might be in the original hydride gas, would form hydroxy-boron compounds which would be non-volatile and not subject to ready reversibility as is the subject complex as identified in the right-hand side of the above equation. The above reaction would also be consummated at approximately room temperature ambient condition and under ambient pressures of approximately 1 atm. After appropriate handling, such as packaging, transportation and storage from the site of production or synthesis to the site of end-use application, such as in an electronic materials fabrication facility, the complex would then be reversed to dissociate the complex to the resulting volatile arsine or phosphine and the boron compound. The reaction releasing the hydride is identified in the equation below :

$$B(C_6F_5)_3 . PH_3 \rightarrow B(C_6F_5)_3+PH_3$$

This reaction is consummated by disassociating the solid appearing on the left-hand side of the equation at temperatures of greater than 55°C. The result is the dissociation of the gaseous phospine from the solid tris(pentafluorophenyl)boron which remains as a solid.

Although the boron compound has been described in the context of tris(pentafluorophenyl)boron, other boron compounds containing aryl ring systems which are at least partially halogenated can be contemplated which are halogenated with chlorine, bromine or fluorine, either partially or fully. Appropriate compounds may include tris(decafluorobiphenyl)boron.

The present Invention is further illustrated by way of the following example.

## EXAMPLE

### Preparation and Properties of Phosphine-tris(pentafluorophenyl) boron [PH₃B(C₆F₅)₃]

A solution of tris(pentafluorophenyl)boron $B(C_6F_5)_3$ (1.5g,, 2.93 mmol) in toluene (10ml) or dichloromethane (10ml) is cooled to -195°C and an excess of gaseous phosphine $PH_3$ (134ml at 760mm Hg, 6mmol) condensed onto the frozen solution. The mixture is allowed to warm to room temperature during which time the pressure in the apparatus is monitored using a mercury manometer and regulated by a vacuum line to maintain a slight positive pressure. The solvent is then pumped off under reduced pressure at room temperature to leave a white solid product (1.7g, m.p. 114-130°C) of phospine-tris(pentafluorophenyl)boron.

The compound is characterised by its FTIR spectrum (in Nujol) and its $^1H$ nmr spectrum in perdeuteriotoluene solution which shows the co-ordinated phospine's proton signal as a doublet ($J_{PH}=410.2$ Hz) at δ-3.34 ppm (relative to $SiMe_4$ standard). Free phosphine in the same solvent is characterised by a doublet ($J_{PH}=186$ Hz) at δ=1.56 ppm. At lower temperatures (e.g. -10°C) the coordinated phospine signal becomes a doublet of septets ($J_{FH}=5.2$ Hz) due to the protons coupling to six equivalent fluorines located at the 2,6-positions on each pentafluororophenyl group in the complex. In the infrared spectrum the P-H stretching vibration is seen at 2405 cm$^{-1}$ which is 78 cm$^{-1}$ higher than for the free phospine (2327 cm$^{-1}$).

A single crystal of the compound grown from dichloromethane solution was determined by X-ray diffraction analysis to contain molecules of $B(C_6F_5)_3.PH_3$ . The coordinated phosphine has a shorter P-H bond length (1.293A) and a wider H-P-H angle (104°) than in free phosphine (P-H=1.42A ; HPH=94°).

When $B(C_6F_5)_3.PH_3$ is heated in vacuo the phosphine is released giving appreciable vapour pressure above 50°C. Preliminary static vapor pressure measurements indicate an enthalpy of dissociation of ca. 81kJ mol$^{-1}$ indicative of a weak P→B co-ordinate bond in the complex. This is confirmed by the mass spectrum which shows strong peaks for $PH_3$ and $B(C_6F_5)_3$ but no peaks corresponding to the complex.

A number of other halogenated phenyl boron compounds were tested as acceptor molecules for the coordination of phosphine. Of these, the tris-(2,6-difluorophenyl)boron compound, $B(C_6H_3F_2)_3.PH_3$, showed an affinity for $PH_3$. Low temperature nmr studies showed that a very weak complex $B(C_6H_3F_2)_3.PH_3$ is formed.

The advantage of the present invention is that it does not require a pressure swing sorption system of containment to desorb the gaseous arsine or phosphine. Chemical kinetics drive the reaction, not diffusion limited processes. Additionally, the binding characteristics of the Lewis acid can be easily modified by modifying the ligand group and/or the Group III element center. The invention also serves as an intrinsic getter of water present in the arsine or phosphine.

Although the present invention has been set forth with regard to a specific preferred embodiment, the full scope of the invention should be ascertained from the claims which follow.

**Claims**

1. A method for handling arsine and phosphine, characterized in that it comprises reacting said arsine and phosphine in a chemically reversible reaction with a boron compound containing ligands comprising aryl ring systems which are at least partially halogenated, to form a stable less-reactive complex at ambient conditions, implementing the necessary handling of the complex and then altering conditions in which the complex is present to be sufficiently non-ambient to reverse said reaction and dissociate the chemically bound complex to result in the free arsine or phospine.

2. A method according to Claim 1, wherein said boron compound additionally reacts with an impurity in the arsine or phosphine irreversibly at the conditions of reversibility of said arsine or phosphine complexes.

3. A method according to Claim 2, wherein said impurity is water.

4. A method according to Claim 1, 2 or 3, wherein said halogen is fluorine.

5. A method according to any preceding Claim, wherein the aryl ring system is fully halogenated.

6. A method according to any preceding Claim, wherein said boron compound is tris(pentafluorophenyl)boron.

7. A method according to any preceding Claim, wherein the non-ambient condition is elevated temperature sufficient to dissociate the complex without decomposing the arsine or phosphine or the boron compound.

8. A method according to any preceeding Claim, wherein said handling comprises packaging, transportation and storage.

EP 0 443 739 A1

European Patent Office

EUROPEAN SEARCH REPORT

Application Number

EP 91 30 0847

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 504 405 (THE SECRETARY OF STATE FOR DEFENCE IN HER BRITANNIC MAJESTY'S GOVERNMENT OF THE UNITED KINGDOM OF GREAT BRITAIN AND NORTHERN IRELAND) * Page 2, line 1 - page 3, line 24; claims 1-7,20 * | 1,7 | A 62 D 3/00 C 01 B 25/06 C 01 G 28/00 C 07 F 9/00 |
| P,X | JOURNAL OF THE CHEMICAL SOCIETY, CHEMICAL COMMUNICATIONS, no. 1, January 1991, pages 7-8; B.C. BRADLEY et al.: "The preparation of 1:1 phosphine: triarylboron complexes. The X-ray crystal structure of (C6F5)3B.PH3" * Whole document * | 1,4-8 | |

TECHNICAL FIELDS SEARCHED (Int. Cl.5)

A 62 D
C 07 F
C 01 B

The present search report has been drawn up for all claims

| Place of search | Date of completion of the search | Examiner |
|---|---|---|
| THE HAGUE | 21-05-1991 | DALKAFOUKI A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)